# EUROPEAN PATENT APPLICATION

(11) **EP 1 207 664 A2**
(43) Date of publication of application: **22.05.2002**
(21) Application number: 01127154.1
(22) Date of filing: 15.11.2001
(51) Int. Cl.: H04L 27/26

(54) **Gain control in an OFDM receiver**

(30) Priority: 16.11.2000 JP 2000349418; 16.11.2000 JP 2000349419
(71) Applicant: Pioneer Corporation, Meguro-ku, Tokyo (JP)
(72) Inventor: Nakao, Satoshi, Kawagoe Koujou, Kawagoe-shi, Saitama-ken 350-8555 (JP); Uchiyama, Kazuhiko, Kawagoe Koujou, Kawagoe-shi, Saitama-ken 350-8555 (JP); Kuriki, Yuki, Kawagoe Koujou, Kawagoe-shi, Saitama-ken 350-8555 (JP); Toki, Katsuhiko, Kawagoe Koujou, Kawagoe-shi, Saitama-ken 350-8555 (JP); Ichikawa, Toshihito, Kawagoe Koujou, Kawagoe-shi, Saitama-ken 350-8555 (JP)
(74) Representative: Popp, Eugen, Dr.

(57) **Abstract**

In one aspect of the invention, an OFDM receiver for receiving and demodulating OFDM signal comprises an automatic gain adjuster (16) for adjusting the level of OFDM signal; a demodulator (18) for demodulating a level-adjusted signal outputted from the automatic gain adjuster (16); a detector (21) for detecting guard intervals contained in the OFDM signal; and a controller (23) for controlling the automatic gain adjuster within the periods of guard intervals detected by the detector (21). In another aspect of the invention, an OFDM receiver includes a detector 21 for detecting a level change of an OFDM signal and an automatic gain controller (16) for adjusting the level of the OFDM signal in accordance with a signal level detected by the detector. The receiver further comprises: a controller (23) for determining an actual signal receiving condition in accordance with a change in the signal level detected by the detector (21), and for setting gain control conditions of the automatic gain controller (16) in accordance with a result of determination of an actual signal receiving condition.

## Description

### BACKGROUND OF THE INVENTION

### Field of the Invention

The present invention relates to an OFDM (Orthogonal Frequency Division Multiplex) receiver having an automatic gain controller capable of automatically adjusting an arriving signal to an appropriate level.

The present invention also relates to an OFDM (Orthogonal Frequency Division Multiplex) receiver having an automatic gain controller capable of automatically adjusting an arriving signal to an appropriate level in view of an actual signal receiving condition.

The present application claims priority from Japanese Applications Nos. 2000-349418 and 2000-349419, the disclosure of which is incorporated herein by reference for all purposes.

### Description of the Related Prior Art

With the development of digital communication technique, people have tried to provide some highly valuable information such as audio data, traffic information as well as weather report with a high quality and at a high speed.

As to high quality communication, there has been known OFDM (Orthogonal Frequency Division Multiplex) method and DAB (Digital Audio Broadcasting ) system using OFDM method.

With regard to DAB system, since its transmission environment will often suffer from a fading phenomenon which usually occur due to an interference caused by multi-pass, folding encoding is performed to treat a random error, while π/4 DQPSK (Differentially Encoded Quadrature Phase Shift Keying) is used in modulation to treat burst error, thereby effecting a desired interleave according to time axis and frequency, and thus ensuring an improvement in transmission quality.

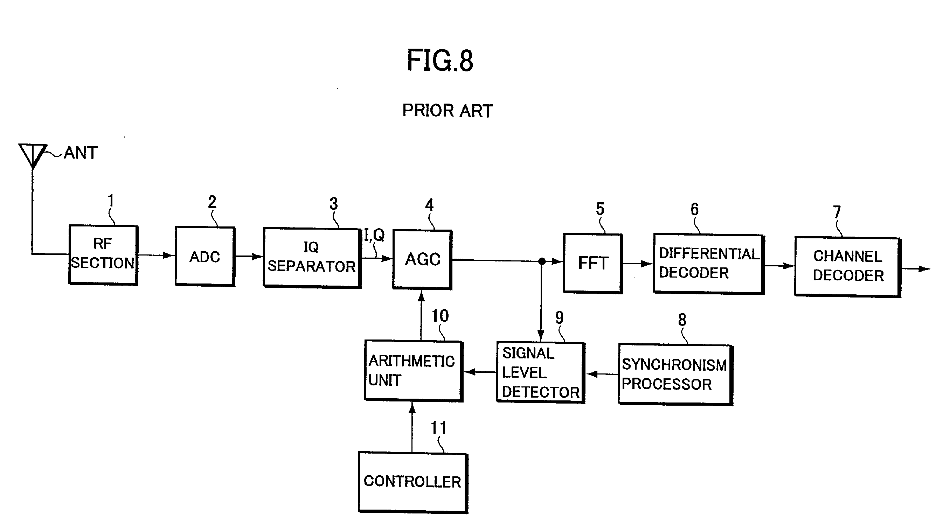

On transmitter side such as broadcasting station, digital data containing digital audio data is OFDM-modulated to form an electromagnetic wave. On user's side equipped with a conventional receiver, the arriving electromagnetic wave will be processed in a manner shown in Fig. 8. Namely, the arriving electromagnetic wave is received by an antenna ANT. Radio frequency signal from the antenna ANT is converted in an RF section 1 into an intermediate frequency signal, and further converted into digital signal by an A/D converter 2, thereby generating a syniphase component signal I and an orthogonal component signal Q in an IQ separator 3, adjusting the level of the syniphase component signal I and the orthogonal component signal Q in an AGC (Automatic Gain Control) circuit 4, and supplying these signals to Fourier transformer 5. The vector data of demodulated information supplied from the Fourier transformer 5 is differential-decoded in a differential decoder 6 in accordance with phase information relating to a predetermined number of carriers. Then, the decoded data is converted into serial digital data in a channel decoder 7, and is further converted into digital audio data in a source decoder (not shown).

Subsequently, synchronism demodulation is performed in the following manner. Namely, a synchronism processor 8 detects a synchronism timing signal from the syniphase component signal I and the orthogonal component signal Q, while the detection result is supplied to a signal level detector 9. The signal level detector 9 operates in accordance with the detection result fed from the synchronism detector 8 so as to detect a signal level change in an output from the AGC circuit 4, in accordance with a predetermined timing in synchronism with the above synchronism timing. A result of the level detection is then fed to an arithmetic unit 10. Here, the arithmetic unit 10 operates according to an instruction from a controller 11, to automatically adjust an AGC gain of the AGC circuit in accordance with the result of the signal level detection. In this way, it is possible to inhibit an undesired level change of both the syniphase component signal I and the orthogonal component signal Q (all being supplied from the AGC circuit 4 to the Fourier transformer 5), thereby ensuring an appropriate demodulation.

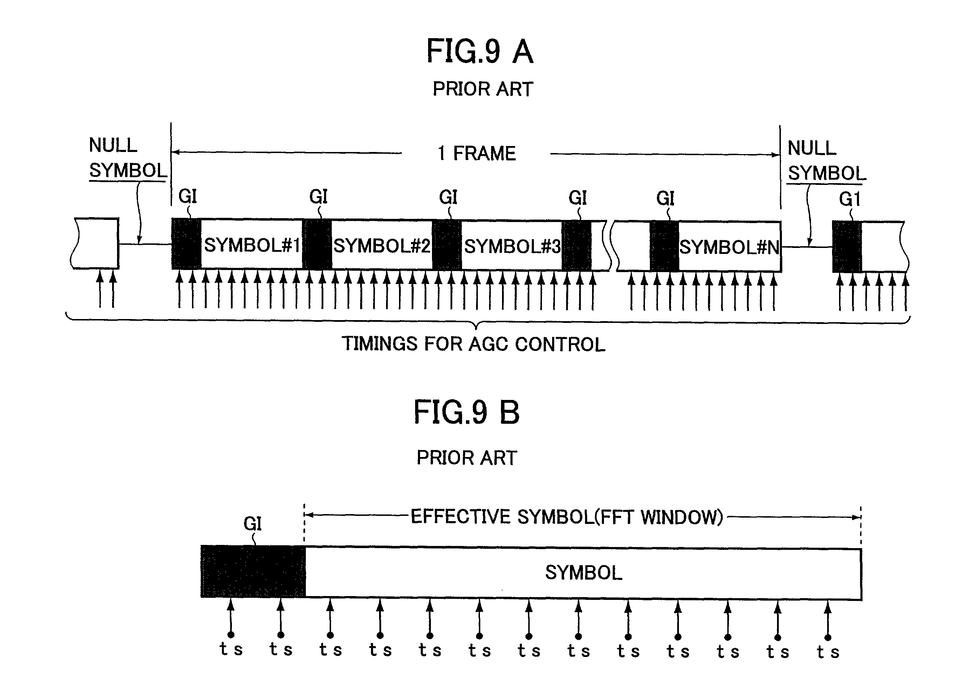

Here, signal to be transmitted through the DAB (Digital Audio Broadcasting) system (hereinafter referred to as DAB signal) is produced in a format including a plurality of frames each having symbols #1 - # N, with each symbol having a guard interval positioned at the front head thereof, as shown in Fig. 9A. Further, between every two frames there is provided a NULL symbol for detecting a synchronism. In fact, each Null symbol is a non-modulated symbol and is set at a lower level than the guard intervals GI as well as symbols #1 - # N in each frame. In this way, the synchronism processor 8 is capable of detecting a synchronism timing by detecting the level of NULL symbols.

Further, a timing for adjusting an AGC gain of the AGC circuit 4 by controlling a feedback to the signal level detector 9 and a feedback to the arithmetic unit 10, is set at each period which is as short as possible, in synchronism with a synchronism timing detected from NULL symbols.

Namely, as shown in Fig. 9B, the gain control of AGC circuit 2 is performed at
each time point ts which has been made extremely short.

Accordingly, by shortening the period of gain control of the AGC circuit 4, even if a portable receiver such as a portable radio receiver suffers from a change in signal receiving power due to a change in a transmission environment, such a change can be properly handled at a very quick speed.

Moreover, in an effective symbol period (FFT window) predetermined as a period for selecting a symbol to be demodulated, Fourier transformer 5 operates to Fourier-convert the syniphase component signal I and the orthogonal component signal Q outputted from the AGC circuit 4, thereby generating vector data of demodulated information.

However, although the above described conventional receiver is formed such that the period of gain control of the AGC circuit 4 can be made as short as possible, there is still existing the following problem. Namely, in order to obtain an appropriate electric power for receiving an arriving signal even in the case where an intensity of an arriving electromagnetic wave has suddenly changed due to an interference such as a fading phenomenon, it is necessary to further increase the resolutions (time resolutions) of the synchronism processor 8, the signal level detector 9 and the arithmetic unit 10, thus undesirably increasing the scales of these circuits.

Further, as shown in Fig. 9A and Fig. 9B, since the period of gain control of the AGC circuit 4 can be made as short as possible (i.e., resolution is increased) without having to pay attention to the position and length of each symbol, the gain control of the AGC circuit 4 can be performed even within each symbol, and the gain-controlled syniphase component signal I and the gain-controlled orthogonal component signal Q are Fourier-converted (within range of FFT window) by the Fourier transformer 5. As a result, when the differential decoder 6 operates to differentially decode the vector data of demodulated information in accordance with a predetermined number (a plurality of) of carriers, a direct-going relation of each carrier is likely to collapse, thus rendering it impossible to perform an appropriate demodulation.

Besides, another problem associated with the above-described conventional portable type radio receiver can be described as follows.

Namely, an output level of the IQ separator 3 (when a movable receiver such as a portable type radio receiver is not in movement) is stored as a reference level. Then, when the receiver is moved and when an output level of the IQ separator 3 has suddenly changed due to a change in the signal transmission condition, the gain control of the AGC circuit 4 is performed so as to adjust the suddenly changed output level to an appropriate level on the base of the above reference level. In this way, even if under a fading condition and an output level of the IQ separator 3 has suddenly changed, such a sudden change can be quickly dealt with in a proper manner.

Then, the Furrier transformer 5, during effective symbol intervals (FFT windows) predetermined as periods for selecting symbols (to be demodulated), operates to Furrier-convert syniphase component signal I and the orthogonal component signal Q (both outputted from the AGC circuit), thereby generating modulation information vector data.

With such a conventional receiver, an environment of receiving an electromagnetic wave arriving under a stabile condition (for example, the receiver is not moving) is used as a reference. However, when an electromagnetic wave arriving under an unstable condition (such as a fading condition) is received, and if there is a sudden change in the output level of the IQ separator, it is necessary that the output level of the IQ separator be AGC-controlled using the above stabile condition as a reference, thereby effecting a desired AGC control while at the same time keeping a desired balance between the stabile condition and the unstable condition.

However, when the AGC control is performed and at the same time the above balance is to be maintained, it is usually impossible to perform an appropriate AGC control effective under varied signal receiving conditions. For example, if a stabile signal receiving condition is set as a reference condition, an undesired influence caused by setting a stable condition as a reference condition will occur in an AGC control performed under an unstable signal receiving condition. As a result, it is impossible to perform an appropriate AGC control under an unstable signal receiving condition.

### SUMMARY OF THE INVENTION

An object of the present invention is to provide an improved receiver having an improved demodulation character.

Another object of the present invention is to provide an improved OFDM receiver having an automatic gain controller capable of automatically adjusting a received signal to an appropriate level in accordance with an actual signal receiving condition.

According to one aspect of the present invention, there is provided an OFDM receiver for receiving and demodulating OFDM signal, the receiver comprising: an automatic gain adjuster for adjusting the level of OFDM signal; a demodulator for demodulating a level-adjusted signal outputted from the automatic gain adjuster; a detector for detecting guard intervals contained in the OFDM signal; and a controller for controlling the automatic gain adjuster within the periods of guard intervals detected by the detector.

Specifically, the controller issues an instruction for level adjustment to the automatic gain adjuster, said issuance being performed within respective periods of a plurality of guard intervals detected by the detector.

In particular, the controller counts the number of guard intervals detected by the detector, and issues an instruction for level adjustment to the automatic gain adjuster once a counted value arrives at a predetermined number.
Using the OFDM receiver of the present invention, it is possible to adjust, during guard intervals added in symbols (which are effective symbols to be demodulated), an arriving OFDO signal to a level suitable for demodulation.
Namely, since it is not necessary to perform signal level adjustment during the periods of symbols (which are effective symbols to be demodulated), it is possible to improve the modulation character without bringing about any unfavorable influence when symbols (which are effective symbols to be demodulated) are demodulated.

According to another aspect of the present invention, there is provided another OFDM receiver including a detector for detecting a level change of an OFDM signal and an automatic gain controller for adjusting the level of the OFDM signal in accordance with a signal level detected by the detector, the receiver further comprising: a controller for determining an actual signal receiving condition in accordance with a change in the signal level detected by the detector, and for setting gain control conditions of the automatic gain controller in accordance with a result of determination of an actual signal receiving condition.

Specifically, the controller stores as history data an average value of previous level detection results, and uses the history data to determine a present signal receiving condition.

In particular, the controller determines an actual signal receiving condition in each predetermined period.

Moreover, the controller detects at least one of gain control period, level detection period, level control range for gain control and gain control amount.

With the use of the OFDM receiver of the present invention, it is possible to determine a signal receiving condition in accordance with the level of a received OFDM signal, thereby performing a desired gain control of the OFDM signal, in accordance with an actual signal receiving condition. Therefore, it is possible to individually perform an appropriate gain control suitable for a stable signal receiving condition and also suitable for an unstable signal receiving condition (such as a fading condition), thereby ensuring a quick demodulation suitable for either stable or unstable signal receiving condition.

### BRIEF DESCRIPTION OF THE DRAWINGS

These and other objects and advantages of the present invention will become clear from the following description with reference to the accompanying drawings, wherein:
Fig. 1 is a block diagram showing an internal constitution of a receiver formed according to the present invention.
Figs. 2A and 2B are explanatory views indicating an operation of the receiver shown in Fig. 1.
Figs. 3A and 3B are explanatory views indicating another operation of the receiver shown in Fig. 1.
Fig. 4 is an explanatory view showing the format of DAB signal.
Figs. 5A and 5B are explanatory views indicating another operation of the receiver shown in Fig. 1.
Fig. 6 is an explanatory view indicating another operation of the receiver shown in Fig. 1.
Fig. 7 is an explanatory view indicating another operation of the receiver shown in Fig. 1.
Fig. 8 is a block diagram showing an internal constitution of a conventional receiver.
Figs. 9A and 9B are explanatory views showing some problems existing in the conventional receiver.

### DETAILED DESCRIPTION OF THE PREFERRED EMBODIMENT

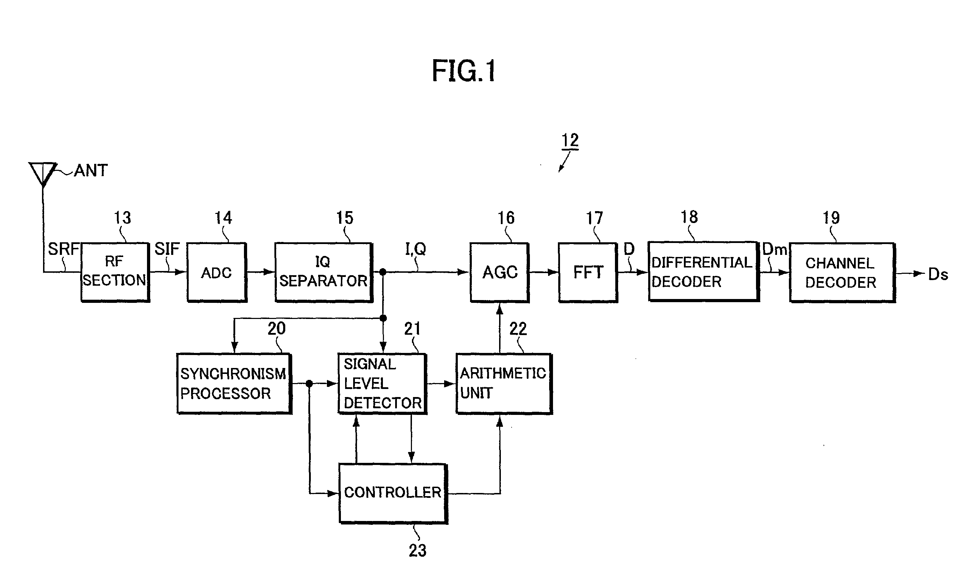

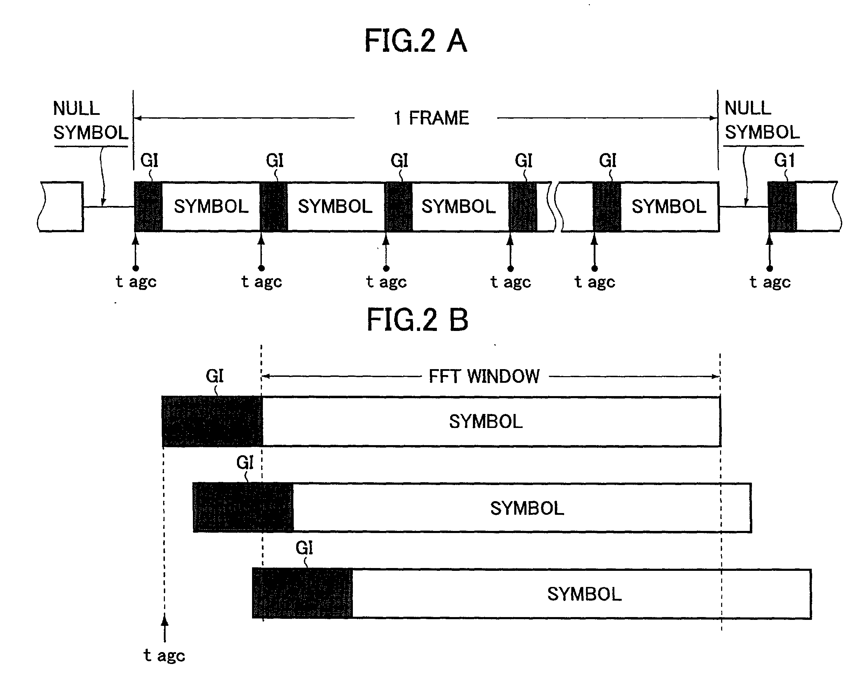

In the following, a first embodiment of the present invention will be described by explaining a receiver for receiving an OFDM-modulated DAB signal. Here, Fig. 1 is a block diagram showing the constitution of a receiver formed according to the present invention, while Fig. 2 is used to explain an operation of the receiver shown in Fig. 1.

Referring to Fig. 1, the receiver 12 of the present invention comprises an antenna ANT for receiving electromagnetic wave transmitted from an information transmitter such as a broadcasting station, an RF section 13 for converting RF signal SRF fed from the antenna ANT into an intermediate frequency signal SIF, an A/D converter 14 for converting the intermediate frequency signal SIF into digital signal, an IQ separator 15 for producing syniphase component signal I and orthogonal component signal Q from the digital signal, an AGC (Automatic Gain Control) circuit 16, a Fourier transformer 17, a differential decoder 18, and a channel decoder 19.

The AGC circuit 16 is a variable-gain type digital filter which is adapted to adjust the syniphase component signal I and the orthogonal component signal Q (separated in the IQ separator 15) to an appropriate level by virtue of gain control (which will be related in detail later).

The Fourier transformer 17 is adapted to Fourier-convert the gain-adjusted syniphase component signal I and the orthogonal component signal Q fed from the AGC circuit 16, thereby producing demodulation information vector data D. Namely, within FFT window having a predetermined time length, the syniphase component signal I and the orthogonal component signal Q fed from the AGC circuit 16 are Fourier-converted, thereby producing demodulation information vector data D.

The differential decoder 18 performs differential decoding in accordance with phase information relating to a predetermined number of carries (with respect to the demodulation information vector data D), and supply decoded data Dm to the channel decoder 19.

The channel decoder 19 is adapted to convert decoded data Dm fed from the differential decoder 18 into serial data Ds. For example, when digital audio data such as MPEG audio data is transmitted hereto as DAB signal, serial data Ds is outputted as MPEG audio data. Then, serial data Ds is converted into digital audio data by a source decoder (not shown).

Further, the receiver 12 is equipped with a synchronism processor 20, a signal level detector 21, an arithmetic unit 22, and a controller 23.

Here, the synchronism processor 20 is adapted to detect, in accordance with syniphase component signal I and orthogonal component signal Q, the length of NULL symbol, the front head position of each frame, the length of each symbol contained in each frame, and the number of symbols contained in each frame. The detection results are then supplied to the signal level detector 21 as well as the controller 23.

The signal level detector 21 is provided to detect, in synchronism with a predetermined timing instructed by the controller 23, the output signal level of the IQ separator 15, and supply detection results to the arithmetic unit 2 and the controller 23.

The arithmetic unit 22 is adapted to detect an output level changing amount of the IQ separator 15 in accordance with detection results fed from the signal level detector 21. The arithmetic unit 22 is also adapted to map gain-control parameter fed from the controller 23 and the output level changing amount, thereby generating a filter coefficient for inhibiting the output level change. The generated filter coefficient is then used to adjust the AGC gain of the AGC circuit 16. Further, a control signal instructing a timing for adjusting the AGC gain of the AGC circuit 16 is fed from the controller 23 to the arithmetic unit 22. In this way, the arithmetic unit 22 can operate to adjust the AGC gain of the AGC circuit 16 at a timing predetermined in accordance with the control signal. Then, the level-controlled syniphase component signal I and the level-controlled orthogonal component signal Q are fed to the Fourier converter 17.

The controller 23 operates, in accordance with detection results (length of NULL symbol, front head position of each frame, length of each symbol and the number of symbols contained in each frame) fed from the synchronism processor 20, determines a timing for the signal level detector 21 to detect the output level, and another timing for the arithmetic unit 22 to effect the gain control of the AGC circuit 16, and supplies these determined timings to the signal level detector 21 and the arithmetic unit 22.

The resolution of the arithmetic unit 22 depends on the resolution of the signal level detector 22. Accordingly, the controller 23 is able to change a response speed of the AGC circuit 16 by changing a detection timing of the signal level detector 21.

Fig. 2 is used to explain an operation of the receiver having the above-described constitution. In detail, Fig. 2A is used to show the format of DAB signal, Fig. 2B is used to show an advantage of the receiver 12 formed according to the present invention.

As described in the above, the synchronism processor 20 operates to detect (in accordance with syniphase component signal I and orthogonal component signal Q fed from the IQ separator 15) the length of NULL symbol, the front head position of each frame, the length of each symbol contained in each frame, and the number of symbols contained in each frame. The detection results are then supplied to the signal level detector 21 and to the controller 23.

In this way, the controller 23 operates to decide a timing for the signal level detector 21 to detect the signal level, and another timing for the AGC circuit 16 to perform a gain control.

In fact, the present embodiment provides several algorithms for determining the above timings, which are set as so-called system programs in the controller 23. Accordingly, the microprocessor (MPU) within the controller 23 will execute the algorithms designated by a user or a system manager. Actually, when each receiver 12 is shipped from a factory as a product, the receiver is processed so that specific algorithms are usually set in advance in it.

At first, with regard to any one of algorithms, as shown in Fig. 2A, the controller 23 operates to arithmetically operate the length of NULL symbol, the front head position of each frame, the length of each symbol contained in each frame, and the number of symbols contained in each frame, thereby detecting an initial position of each guard interval GI and issuing an instruction to the signal level detector 21 so as to detect an output level of the IQ separator 15 at each time point Tagc (when GI is detected).

Further, after the passing of a predetermined delay time Δτ, the controller 23 issues an instruction to the arithmetic unit 22 to effect the gain control of the AGC circuit 16. Accordingly, the arithmetic unit 22 operates to adjust the AGC gain of the AGC circuit 16 at each time Tagc+ΔT, so as to inhibit a signal level change detected by the signal level detector 21.

Here, although the delay time Δτ is not shown in Fig. 2A, such a delay time is set at a length necessary for the signal level detector 21 to detect an output level of the IQ separator 15 and then send the detection result to the arithmetic unit 22. At this time, since the delay time Δτ is an extremely short time period, such a delay time is deemed to be at the same time point as each time point Tagc.

Further, although a time point at which the AGC circuit 16 performs a gain control will become a later time point than each time point tagc +Δτ, since the arithmetic unit 22 is formed by high speed electronic device such as DPS (Digital Signal Processor ) and FPGA (Field Programable Array), a time at which the gain control is performed is allowed to be deemed as substantially the same time point as each time point Tagc.

As a result, as shown in Fig. 2B, the gain control by the AGC circuit 16 is performed within period of guard interval GI. Then, the Furrier transformer 17 operates to Furrier-convert the syniphase component signal I and the orthogonal component signal Q (gain-controlled at an appropriate level) within a period of the predetermined FFT window, thereby generating demodulation information data D corresponding to each symbol.

In this way, since the gain-control of the AGC circuit 16 is effected within the period of guard interval GI (located at the front head of each symbol of each frame), when a differential decoding is performed by the differential decoder 18 in accordance with a predetermined number (a plurality) of carriers, it is possible to correctly maintain a direct-going relation of each carrier, thereby ensuring an improved demodulation character (as compared with a prior art of performing gain control within a symbol).

Further, even if the above gain control is performed between continuously connected symbols and an electric power is different from one symbol to another, when the decoding process is carried out in the differential decoder 18, it is still possible to obtain correct phase information, thereby avoiding a possible deterioration of the demodulation character.

Moreover, since the above gain control is performed for each guard interval GI, it is not necessary to have a high resolution (which is necessary in a prior art). Therefore, it is not necessary to increase the circuit scale, thereby simplifying the circuit.

In addition, since the period of each guard interval GI can be easily detected by detecting the positions and lengths of NULL symbols, it is possible to easily and precisely determine a gain control timing. Further, by using an extremely simple algorithm (program), it is possible to determine a gain-control timing with a high precision.

Besides, when receiving an electromagnetic wave delayed in a multi-pass condition, a result will be like that shown in second and third stages of Fig. 2B. Namely, although each symbol is at first delayed and then received, it is still possible for the Furrier transformer 17 to properly Furrier-convert the received delayed symbol only by determining a gain control time point tagc, in accordance with the position and length of the NULL symbols obtained by receiving direct wave (electromagnetic wave directly transmitted from a base station).

Namely, in the case where a symbol shown in the first stage in Fig. 2B has been obtained from a direct wave, once it is decided to perform a gain control at a time point tagc during a guard interval GI, since FFT windows with respect to the received delayed symbols (symbols at second and third stages) are set at time points later than tagc, it is impossible for the AGC circuit 16 to perform the gain control within period of FFT window. As a result, when a decoding process is performed in the differential decoder 18, it is possible to realize a receiver robust in the multi-pass condition, without damaging the direct-going relation.

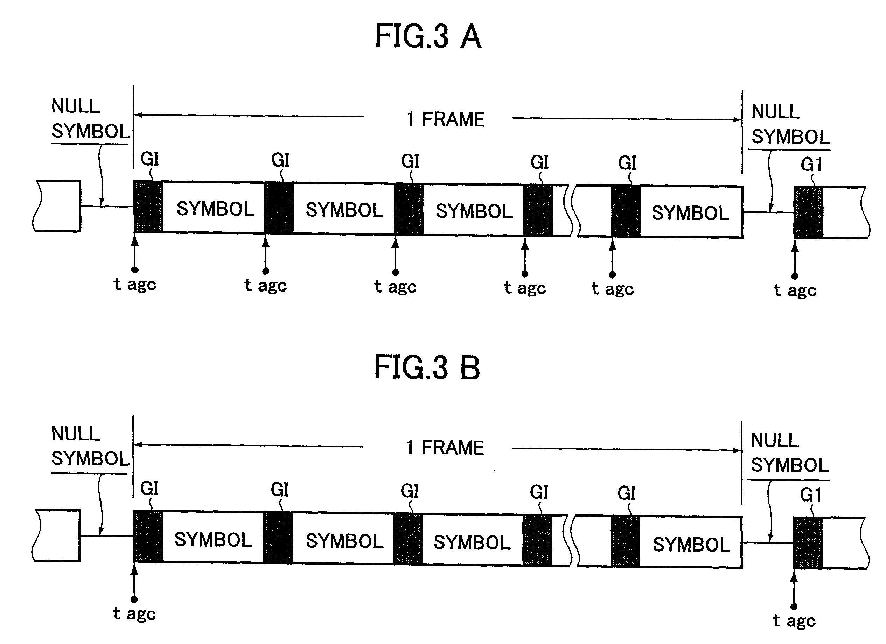

Next, Fig. 3 is referred and description will be given to explain a condition where an AGC circuit 16 performs the gain control in accordance with other algorithm.

Fig. 3A is used to show not a gain control performed by the AGC circuit 16 for each symbol, but a gain control performed by the AGC circuit 16 for a plurality of symbols.

Namely, guard intervals located at the respective front heads of the plurality of symbols contained in one frame are counted. Each time a counted value reaches a predetermined number, the AGC circuit 16 performs the gain control at each time point tagc during a guard interval GI.

At these time points tagc, the controller 23 operates to detect the positions of all guard intervals GI, in accordance with the lengths of NULL symbols, the front head position of each frame, and the length of each symbol and the number of symbols contained within each frame. In this way, from the positions of all the guard intervals GI, it is allowed to select the positions of guard intervals GI in arithmetic or geometric progression relation obtained by the above counting process, thereby determining a time point tagc for the AGC circuit 16 to perform a gain control during a period of a selected guard interval GI.

However, the method for selecting the positions of guard intervals GI in the predetermined arithmetic or geometric progression relation is only one typical example. It is in fact also possible to perform random selection.

In this way, when the AGC circuit 16 performs a gain control for a plurality of symbols, it is possible to obtain an effect of alleviating a burden on the controller 23.

Then, as shown in Fig. 3B, it is also possible for the AGC circuit 16 to perform a gain control only during a guard interval GI next to a NULL symbol, i.e., performs gain control only once for each frame, thereby obtaining an effect of further alleviating a burden on the controller 23.

As described in the above, with the use of the receiver 12 formed according to the present invention, since the AGC circuit 16 is adapted to perform the gain control during each guard interval GI, it becomes possible to perform an appropriate AGC control and to simplify the circuit scale, without having to excessively increase the resolution.

Further, since the FFT window set in the Furrier transformer 17 comes after a gain control is performed by the AGC circuit 16, it is possible to avoid a problem that a direct-going relation of each carrier collapses when a differential decoding is performed. Besides, it is possible to provide a robust receiver strong in a multi-pass condition.

Although it has been stated in the above description that the AGC circuit 16 performs a gain control at an initial time point during each guard interval GI, the present invention should not be limited to this specific embodiment. In fact, the AGC circuit 16 can perform a gain control at any time point during each guard interval GI, thereby avoiding a harmful influence to symbols when the AGC circuit 16 performs a gain control, thus effecting an appropriate adjustment corresponding to an actual application.

Further, although it has been described in the above that the controller 23 can determine a timing for the signal level detector 21 to detect an output level of the IQ separator 15 and another timing for the arithmetic unit 22 to cause the AGC circuit 16 to perform a gain control, it is also possible that the signal level detector 21 and the arithmetic unit 22 are allowed to decide their own operation timings themselves. Namely, once the controller 23 detects the start point of each frame and issues an instruction for performing AGC control to the signal level detector 21, the signal level detector 21 can operate in accordance with the length of NULL symbol, the front head of each frame, the length of each symbol and the number of symbols contained within each frame (these data are all supplied from the synchronism processor 20), thereby determining a timing for detecting the output level of the IQ separator 15, and then detecting such an output level. Subsequently, once the signal level detector 21 supplies the detected output level to the arithmetic unit 22, the arithmetic unit 22 will compute a filter factor for adjusting the gain of the AGC circuit 16 and thus perform an AGC control.
Moreover, although the above description has been given to explain the receiver in which the AGC circuit 16 is connected at the rear side of the IQ separator 15, it is also possible that the AGC circuit 16 can be connected at other position, e. g. at the rear side of RF section 13.

In addition, although the above description has been given to an example for receiving DAB signal, the receiver 12 of the present invention can also be used to receive OFDM signal (not having NULL symbol at the front head of each frame). In this way, it is possible to detect synchronism information from the OFDA signal and it is possible for the signal level detector 21 to detect a reception power in accordance with the detection results. As a result, it is possible to perform AGC control at other time points than symbol periods. Namely, the receiver 12 of the present embodiment is not limited to the reception of DAB signal, but also suitable for receiving OFDA signal, thereby exhibiting a desired universality.

The OFDM receiver of the present invention is adapted to adjust (during a guard interval period contained in an OFDM signal) an arriving OFDO signal to a level suitable for demodulation. Therefore, it is possible to improve a modulation character without bringing about any unfavorable influence when symbols (which are effective symbols to be demodulated) are demodulated.

In this way, it is possible to perform an appropriate AGC control and to simplify the circuit scale, without having to excessively increase the resolution.
In the following, a second embodiment of the present invention will be described with reference to Figs. 1,4-7.

Referring to Fig. 1, the controller 23 operates to determine whether or not there is a change in the signal receiving condition, in accordance with the detection result (showing an output level of the IQ separator 15) supplied from the signal level detector 21. Then, taking into account an actual signal receiving condition, an AGC control timing is changed or an output level detecting capture range of the signal level detector 21 is changed, thereby sending an instruction to the signal level detector 21 and the arithmetic unit 22 for changing a variable gain control amount of the AGC circuit 16.

In fact, since the resolution of the arithmetic unit 22 depends upon the resolution of the signal level detector 21, the controller 23 is enabled to change a response speed of the AGC circuit 16 by changing a detection timing of the signal level detector 21.

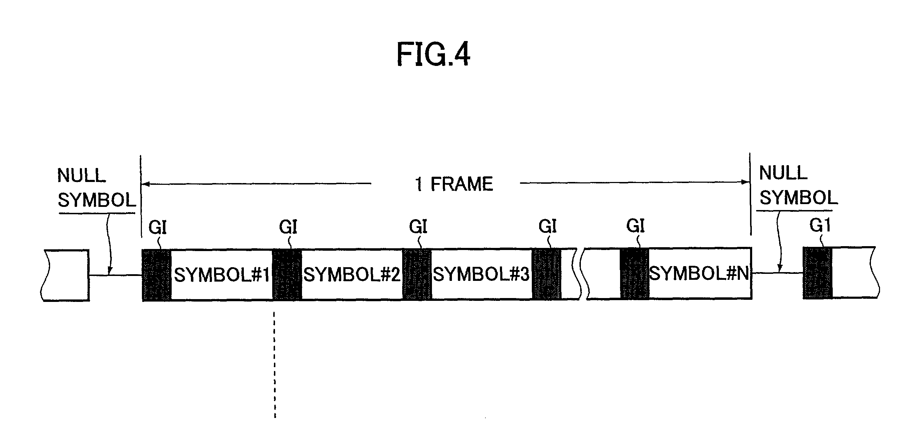

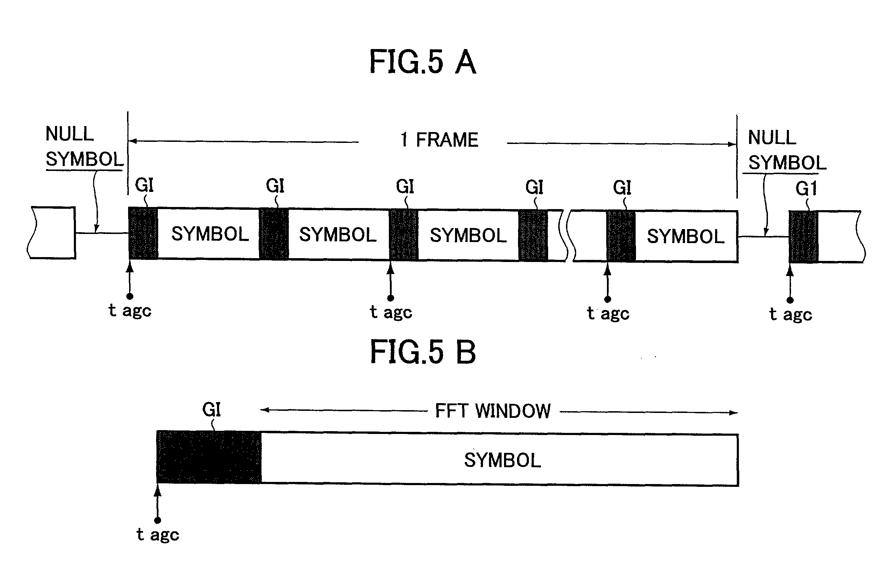

An operation of the receiver of the present embodiment will be described in the following with reference to Fig. 4 and Fig. 5.

As described in the above, the synchronism processor 20 operates to detect the length of NULL symbol, the front head position of each frame, the length of each symbol contained in each frame, and the number of symbols contained in each frame, in accordance with syniphase component signal I and orthogonal component signal Q fed from IQ separator 15. Further, the signal level detector 21 operates to detect the output level of the IQ separator 15, and the detection results are then supplied to the arithmetic unit 22 and the controller 23.

When the respective detection results are supplied to the controller 23 from the synchronism processor 20 and the signal level detector 21, the controller 23 will arithmetically process the length of NULL symbol, the front head position of each frame, the length of each symbol contained in each frame, and the number of symbols contained in each frame, thereby detecting an initial position of each guard interval GI.

Further, a difference value is calculated showing a difference between an average value of level detection results supplied until the last time and a level detection result supplied from the signal level detector 21 at this time. If a difference value is within a predetermined standard range, a new average value obtained by using the level detection results supplied until the last time and a level detection result supplied at this time is calculated.

Namely, the controller 23 operates to store as its history data an average value of level detection results fed successively from the signal level detector 21. Thus, upon receiving a new level detection result, the controller 23 operates to obtain a difference value and determines whether such difference value is within the predetermined standard range. If the difference value is within the predetermined standard range, an average value serving as history data is operated and stored again.

Then, if the above difference value corresponding to a newly supplied level detection result is within the predetermined standard range, instruction will be sent to the signal level detector 21 and the arithmetic unit 22 for maintaining AGC control conditions set in the AGC circuit 16.

In the controller 23 of the present embodiment, as AGC control conditions there have been set AGC control timing, an output level detecting capture range of the signal level detector 21, and a variable gain control amount of the AGC circuit. If the above difference value corresponding to a newly supplied level detection result is within the predetermined standard range, these AGC control conditions are maintained.

For example, if the above difference value determined in accordance with the standard range is a value under a stable signal receiving condition, the AGC control conditions should be maintained as such, thereby performing an appropriate AGC control under the stable signal receiving condition.

In detail, as shown in Fig. 5A, the controller 23 operates to issue instruction to the arithmetic unit 22 for carrying out AGC control. In fact, such instruction is issued at the respective time points tagc of discretely occurred guard intervals GI among detected guard intervals GI. At this time, the arithmetic unit 22 operates to generate a filter coefficient of the AGC circuit 16 so as to perform gain adjustment at each time point tagc, thereby realizing an appropriate AGC control under a stable signal receiving condition. Namely, when it is determined that a signal receiving condition is stable, the AGC control is performed not within all the detected guard intervals GI, but only within guard intervals existing in successive positions of arithmetic or geometric progression, thereby alleviating a burden on the AGC control.

Then, as shown in Fig. 5B, the Furrier transformer 17 operates to Furrier-convert (during a period of predetermined FFT window) the syniphase component signal I and orthogonal component signal Q which have all been gain-controlled at an appropriate value, thereby generating demodulation information data D corresponding to each symbol.

On the other hand, if the above difference value corresponding to a newly supplied level detection result is not within the predetermined standard range, the controller 23 will determine that the signal receiving condition has changed, so as to erase an old average value and start to obtain a new average value. Further, old AGC control conditions set within the AGC circuit 16 are changed, thereby setting new AGC control conditions suitable for the changed signal receiving condition.

Namely, new AGC control conditions can be set by changing AGC control timing, an output level detecting capture range of the signal level detector 21, and a variable gain control amount of the AGC circuit 16.

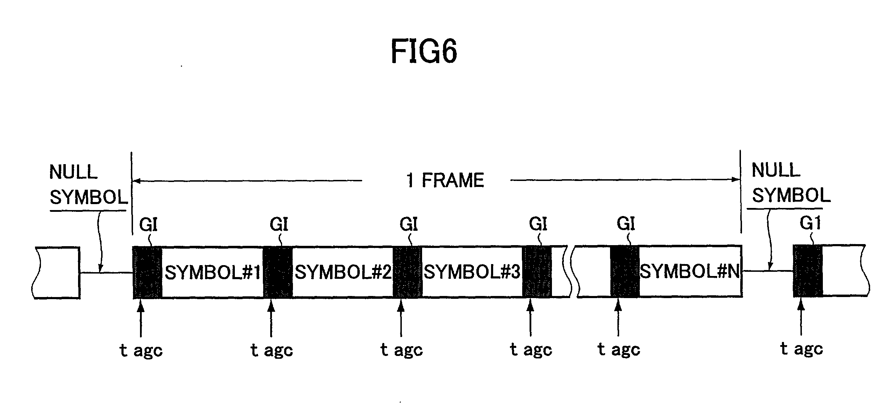

For example, if signal is received under a fading condition and if the above difference value corresponding to a level detection result is not within the predetermined standard range, an output level detecting capture range of the signal level detector 21 is enlarged and at the same time the variable gain control amount of the AGC circuit 16 is increased. Then, as shown in Fig. 6, an AGC control timing is changed-over so as to perform the AGC control within all the guard intervals GI, thereby effecting a quick AGC control even under an unstable signal receiving condition.

Further, once the above difference value corresponding to a newly supplied level detection result is again within the predetermined standard range, the controller 23 will determine that the signal receiving condition is stable, so as to erase an old average value and start to obtain a new average value. In this way, the controller may return to an AGC control suitable for a stable signal receiving condition, as shown in Fig. 5A.

In this way, with the use of the receiver 12 of the present embodiment, an output level of the IQ separator 15 is detected and a signal receiving condition is determined using the detection result. In this way, it is possible to perform an AGC control suitable for an actual signal receiving condition.

Further, since the FFT window set in the Furrier transformer 17 will come after the gain control is executed by the AGC circuit 16 (after a time point Tagc), it is possible to prevent a problem that the direct-going relation of each carrier will collapse during differential decoding process, thereby improving the demodulation character.

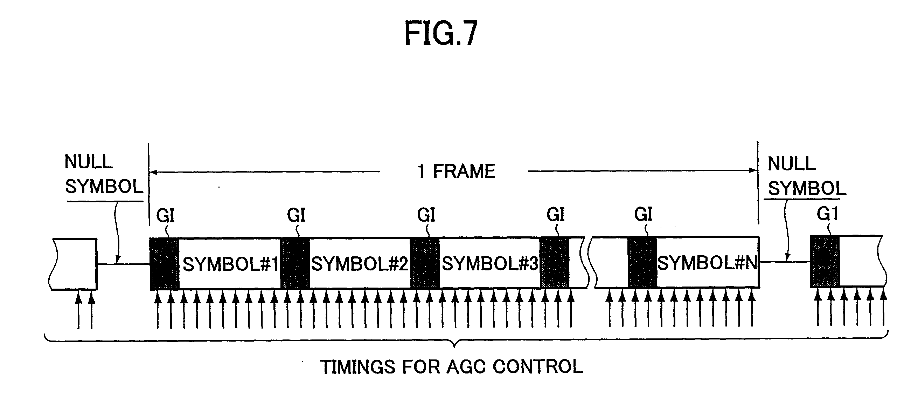

Although it has been described in the present embodiment that the AGC control is performed during guard intervals GI, it is also possible to perform the AGC control during the periods of symbols (to be demodulated). Namely, if the controller 23 determines that a signal receiving condition is unstable (such as a fading condition), it is allowed to perform AGC control during the periods of symbols (to be demodulated) and to finely divide the periods of AGC control (increasing resolution), in a manner shown in Fig. 7. In this way, even if there is a sudden change in the intensity of an arriving electromagnetic wave, it is still possible to perform quick AGC control corresponding to an actual signal receiving condition.

In the above description, it is related that the controller 23 operates to determine an actual signal receiving condition in accordance with a difference between an average value of levels previously detected by the signal level detector 21 and a newly detected result. However, it is also possible to employ some other different methods. For example, it is possible that during a predetermined period, a detected level is compared with a predetermined threshold value, so that if the detected level is larger than the threshold value, it is allowed to determine that the signal receiving condition at this time is unstable. In addition, it is also possible that guard intervals GI are counted, and that whenever the counted number arrives at a predetermined value, an output level of the IQ separator 15 is detected, so that if the detected level is larger than the threshold value, it is allowed to determine that the signal receiving condition at this time is unstable.

Although it has been described in the above that it is allowed to use a non-synchronism method for detecting an actual signal receiving condition (involving an investigation of an average value), it is also possible that an actual signal receiving condition may be detected in synchronism with a predetermined period or a predetermined number of symbols.

Further, although it has been described in the above that the controller 23 can determine a timing for the signal level detector 21 to detect an output level of the IQ separator 15 and another timing for the arithmetic unit 22 to cause the AGC circuit 16 to perform gain control, it is also possible that the signal level detector 21 and the arithmetic unit 22 are allowed to decide their own operation timings themselves. Namely, once the controller 23 operates to determine an actual signal receiving condition and issue an instruction for performing AGC control to the signal level detector 21, the signal level detector 21 can operate in accordance with the length of NULL symbol, the front head of each frame, the length of each symbol and the number of symbols contained within each frame (they are all supplied from the synchronism processor 20), thereby determining a timing for detecting the output level of the IQ separator 15, and then detecting such an output level. Subsequently, once the signal level detector 21 supplies the detected output level to the arithmetic unit 22, the arithmetic unit 22 will operate to set AGC control conditions (corresponding to an actual signal receiving condition) most suitable for adjusting the gain of the AGC circuit 16.

Moreover, although the above description has been given to explain the receiver in which the AGC circuit 16 is connected at the rear side of the IQ separator 15, it is also possible that the AGC circuit 16 can be connected at other position, e. g. at the rear side of RF section 13.

In addition, although the above description has been given to an example for receiving DAB signal, the receiver 12 of the present invention can also be used to receive OFDM signal (not having NULL symbol at the front head of each frame). In this way, it is possible to detect synchronism information from the OFDA signal and it is possible for the signal level detector 21 to detect a reception power in accordance with the detection results. As a result, it is possible to perform AGC control at other time points than symbol periods. Namely, the receiver 12 of the present embodiment is not limited to the reception of DAB signal, but also suitable for receiving OFDA signal, thereby exhibiting a desired universality.

With the use of the OFDM receiver formed according to the present embodiment, since a signal receiving condition is detected in accordance with an actual signal receiving level of OFDM signal, and since the gain control of the OFDM signal may be performed individually corresponding to an actual signal receiving condition, it is possible to individually perform an appropriate gain control suitable for a stable signal receiving condition as well as an unstable signal receiving condition (such as fading condition), thereby ensuring a quick demodulation suitable for each stable or unstable signal receiving condition.

While the invention has been described in conjunction with preferred specific embodiment thereof, it will be understood that this description is intended to illustrate and not limit the scope of the invention, which is defined by the following claims.

## Claims

1. An OFDM receiver for receiving and demodulating OFDM signal, the receiver comprising:
an automatic gain adjuster (16) for adjusting the level of OFDM signal;
a demodulator (18) for demodulating a level-adjusted signal outputted from the automatic gain adjuster;
a detector (21) for detecting guard intervals contained in the OFDM signal; and
a controller (23) for controlling the automatic gain adjuster within the periods of guard intervals detected by the detector (21).

2. An OFDM receiver according to claim 1, wherein the controller (23) issues an instruction for level adjustment to the automatic gain adjuster (16), said issuance being formed within respective periods of a plurality of guard intervals detected by the detector (21).

3. An OFDM receiver according to claim 1, wherein the controller (23) counts the number of guard intervals detected by the detector (21), and issues an instruction for level adjustment to the automatic gain adjuster once a counted value arrives at a predetermined number.

4. An OFDM receiver including a detector (21) for detecting a level change of an OFDM signal and an automatic gain controller (16) for adjusting the level of the OFDM signal in accordance with a signal level detected by the detector, the receiver further comprising:
a controller (23) for determining an actual signal receiving condition in accordance with a change in the signal level detected by the detector, and for setting gain control conditions of the automatic gain controller in accordance with a result of determination of an actual signal receiving condition.

5. An OFDM receiver according to claim 4, wherein the controller (23) stores as history data an average value of previous level detection results, and uses the history data to determine a present signal receiving condition.

6. An OFDM receiver according to claim 4, wherein the controller (23) determines an actual signal receiving condition in each predetermined period.

7. An OFDM receiver according to any one of claims 4 to 6, wherein the controller (23) detects at least one of gain control period, level detection period, level control range for gain control and gain control amount.
